# EUROPÄISCHE PATENTSCHRIFT

(11) **EP 1 972 166 B1**
(45) Veröffentlichungstag und Bekanntmachung des Hinweises auf die Patenterteilung: **20.05.2015**
(21) Anmeldenummer: 06841511.6
(22) Anmeldetag: 20.12.2006
(51) Int. Cl.: H04W 12/06, H04W 28/24

(54) **VERFAHREN ZUM BEREITSTELLEN EINER DIENSTQUALITÄT IN EINEM WIMAX-KOMMUNIKATIONSNETZWERK UND VERFAHREN ZUM AUSWÄHLEN EINER ZUGANGS-TRANSPORTRESSOURCENKONTROLLFUNKTION DURCH EINE RICHTLINIENENTSCHEIDUNGSFUNKTION IN EINEM KOMMUNIKATIONSNETZWERK**
METHOD FOR PROVIDING SERVICE QUALITY IN A WIMAX COMMUNICATION NETWORK, AND METHOD FOR SELECTING AN ACCESS TRANSPORT RESOURCE CONTROL FUNCTION BY MEANS OF A GUIDELINE DECISION-MAKING FUNCTION IN A COMMUNICATION NETWORK
PROCÉDÉ DESTINÉ À FOURNIR UNE QUALITÉ DE SERVICE DANS UN RÉSEAU DE COMMUNICATION WIMAX, ET PROCÉDÉ PERMETTANT DE SÉLECTIONNER UNE FONCTION DE CONTRÔLE DE RESSOURCES DE TRANSPORT D'ACCÈS AU MOYEN D'UNE FONCTION DE DÉCISION DE LIGNE DIRECTRICE DANS UN RÉSEA

(30) Priorität: 10.01.2006 DE 102006001274; 20.03.2006 DE 102006012655
(43) Veröffentlichungstag der Anmeldung: 24.09.2008
(73) Patentinhaber: Siemens Aktiengesellschaft, 80333 München (DE)
(72) Erfinder: KRÖSELBERG, Dirk, 80469 München (DE); PREMEC, Domagoj, 10010 Zagreb (HR); TSCHOFENIG, Hannes, 81735 München (DE); WISENÖCKER, Richard, 1140 Wien (AT)
(86) Internationale Anmeldenummer: PCT/EP2006/070011
(87) Internationale Veröffentlichungsnummer: WO 2007/080050

(56) Entgegenhaltungen:
- EP-A1- 1 619 917
- WO-A-2004/093480
- US-A1- 2005 169 253
- YEGANI P: "WiMAX Overview" INTERNET CITATION, [Online] November 2005 (2005-11), Seiten 1-22, XP002387044 Gefunden im Internet: URL:http://www3.ietf.org/proceedings/05nov /slides/16ng-4.pdf> [gefunden am 2006-06-23] in der Anmeldung erwähnt

## Beschreibung

Die Erfindung betrifft ein Verfahren zum Bereitstellen einer Dienstqualität auf einer Luftschnittstelle eines Zugangsnetzwerks in einem WiMAX-Kommunikationsnetzwerk. Ferner betrifft die Erfindung ein Verfahren zum Auswählen einer Zugangs-Transportressourcenkontrollfunktion, der ein Kundenzugangsgerät zugeordnet ist, durch eine Richtlinienentscheidungsfunktion in einem Kommunikationsnetzwerk, insbesondere gemäß einem Kommunikationsnetzwerk gemäß der ITU-T.

WiMAX, kurz für Worldwide Interoperability for Microwave Access, ist ein Industriekonsortium, das basierend auf einer Technologie für eine Luftschnittstelle für drahtlose Datenübertragung gemäß dem IEEE 802.16-Standard eine Netzwerkarchitektur für ein WiMAX-Kommunikationsnetzwerk definiert. Die Netzwerkarchitektur des WiMAX-Kommunikationsnetzwerks ist Gegenstand eines Standardisierungsprozesses. Für das WiMAX-Kommunikationsnetzwerk ist vorgesehen, dass eine Dienstqualität für die Datenübertragung abhängig von Anforderungen des jeweiligen Dienstes vorgebbar ist. Die Dienstqualität wird auch als Quality of Service oder kurz mit QoS bezeichnet.

In Parviz Yegani, "WiMAX Overview", IETF-64, 7.-11. November 2005, Vancouver, Canada, http://www3.ietf.org/proceedings/05nov/slides/16ng-4.pdf (heruntergeladen und ausgedruckt am 27.02.2006) ist ein Überblick über WiMAX-Kommunikationsnetzwerke und eine entsprechende Netzwerkarchitektur offenbart. Ferner ist ein Rahmen für eine Signalisierung der Dienstqualität offenbart. Es ist jedoch nicht offenbart, wie die Signalisierung der Dienstqualität erfolgt.

In der WO 2004/093480 A1 ist ein Kommunikationssystem und ein Kommunikationsverfahren offenbart. Ein Netzwerkendgerät, das einen Dienst in Anspruch nimmt, steuert eine Dienstqualität der Datenübertragung und sammelt dazu dienstqualitätsbezogene Daten. Eine Authentifizierungs-, Autorisierungs- und Abrechnungs-Infrastruktur wird genutzt zum Übertragen von dienstqualitätsbezogenen Konfigurationsparametern, die von einem Service Level Agreement Manager eines Heimatnetzwerks des Netzwerkendgeräts festgelegt werden, an das Endgerät.

Lösungen für die Signalisierung der Dienstqualität in Kommunikationsnetzwerken, die von anderen Standardisierungsorganisationen erarbeitet wurden, sind für WiMAX-Kommunikationsnetzwerke nur bedingt anwendbar. In der IETF wurde der Schwerpunkt der Arbeiten auf eine Pfad-gekoppelte Signalisierung gelegt (Path-Coupled Signaling), die z.B. als Next Step in Signaling oder kurz als NSIS oder als Resource reSerVation Protocol oder kurz als RSVP bekannt sind. In der 3GPP, der ITU-T und der ETSI TISPAN wird ein anderer architektureller Ansatz verfolgt. Dort ist vorgesehen, dass eine Applikation, die einem Benutzer eine dienstqualitätsbezogene Anwendung bereitstellt, dem jeweiligen Zugangsnetzwerk zugeordnet ist, in dem der Benutzer aktuell angemeldet ist. Für WiMAX-Kommunikationsnetzwerke ist jedoch vorgesehen, dass die Applikation unabhängig von dem jeweiligen Zugangsnetzwerk ist und z.B. einem Heimatnetzwerk des Benutzers zugeordnet ist. Dies hat jedoch zur Folge, dass die Applikation das Zugangsnetzwerk des Benutzers nicht kennt.

In der ITU-T, kurz für International Telecommunication Union Telecommunication Standardization Sector, ist in der Study Group 11 eine weitere Netzwerkarchitektur eines Kommunikationsnetzwerks Gegenstand eines Standardisierungsprozesses. Dabei handelt es sich um ein so genanntes Next Generation Network, für das ebenfalls vorgesehen ist, dass eine Dienstqualität einer Datenübertragung vorgebbar ist.

In "Series Q: Switching and Signalling - Signalling requirements for IP-QoS", ITU-T Q-series Recommendations, Supplement 51, 12/2004 ist offenbart, wie eine IP-basierte Signalisierung der Dienstqualität in dem Kommunikationsnetzwerk erfolgen soll. Weitere Informationen zur Signalisierung der Dienstqualität sind offenbart in Hui-Lan Lu, "Resource and Admission Control in Next Generation Networks - the ITU-T View", MFA Forum NGN Event, 31. Oktober 2005, http://-www.mfaforum.org/events/RACF-MFA_Hui-Lan%20Lu.pdf (heruntergeladen und ausgedruckt am 27.02.2006) und Hui-Lan Lu, "Quality of Service in Next Generation Networks", NGN Industry Event, 18. November 2005, London, http://www.itu.int/ITU-T/-worksem/ngn/200511/presentations/lu.zip (heruntergeladen und ausgedruckt am 27.02.2006).

Die Aufgabe der Erfindung ist, ein Verfahren zum Bereitstellen einer Dienstqualität in einem WiMAX-Kommunikationsnetzwerk zu schaffen, das einfach ist. Ferner ist die Aufgabe der Erfindung, ein Verfahren zum Auswählen einer Zugangs-Transportressourcenkontrollfunktion durch eine Richtlinienentscheidungsfunktion in einem Kommunikationsnetzwerk zu schaffen, das einfach ist.

Die Aufgabe wird gelöst durch die Merkmale des unabhängigen Patentanspruchs Vorteilhafte Ausgestaltungen der Erfindung sind in den Unteransprüchen gekennzeichnet.

Gemäß eines ersten Aspekts zeichnet sich die Erfindung aus durch ein Verfahren zum Bereitstellen einer Dienstqualität auf einer Luftschnittstelle eines Zugangsnetzwerks in einem WiMAX-Kommunikationsnetzwerk durch eine Anwendungsfunktion. Die Anwendungsfunktion möchte einem Benutzer des WiMAX-Kommunikationsnetzwerks eine dienstqualitätbezogene Anwendung bereitstellen. Die gewünschte Dienstqualität wird über eine Authentifizierungs-, Autorisierungs- und Abrechnungs-Infrastruktur des WiMAX-Kommunikationsnetzwerks, kurz: AAA-Infrastruktur, signalisiert. Die Anwendungsfunktion kommuniziert mit einem Authentifizierungs-, Autorisierungs- und Abrechnungs-Server, kurz: AAA-Server, eines Heimatnetzwerks des Benutzers zum Authentifizieren und Autorisieren des Benutzers. Die gewünschte Dienstqualität für die dienstqualitätbezogene Anwendung wird bei dieser Kommunikation zum Autorisieren an den AAA-Server übertragen.

Der Vorteil ist, dass die AAA-Infrastruktur bereits vorgesehen ist für das Authentifizieren und Autorisieren von Benutzern des WiMAX-Kommunikationsnetzwerks während eines Netzwerkzugangsverfahrens, durch das der jeweilige Benutzer Zugang zu dem Zugangsnetzwerk erhält oder diesem der Zugang versagt wird, und für das Abrechnen von Leistungen. Dadurch müssen keine neuen Komponenten in die Netzwerkarchitektur des WiMAX-Kommunikationsnetzwerks eingeführt werden, um die Dienstqualität zu signalisieren. Durch das Netzwerkzugangsverfahren ist in der AAA-Infrastruktur das Zugangsnetzwerk bekannt, in dem der Benutzer aktuell angemeldet ist. Dadurch ist auch bekannt, in welches Zugangsnetzwerk die Dienstqualität signalisiert werden muss. Dies ermöglicht ein einfaches, dynamisches Signalisieren der Dienstqualität abhängig von jeweiligen aktuellen Anforderungen an die Dienstqualität. Ein weiterer Vorteil ist, dass der Anwendungsfunktion der AAA-Server in dem Heimatnetzwerk des Benutzers bekannt ist und die Anwendungsfunktion so einfach mit dem AAA-Server kommunizieren kann. Ferner können die Anwendungsfunktion und der AAA-Server auch miteinander kommunizieren, um den Benutzer für das Nutzen der Anwendungsfunktion zu authentifizieren und zu autorisieren. Das Übertragen der gewünschten Dienstqualität von der Anwendungsfunktion an den AAA-Server ist so sehr einfach möglich.

In diesem Zusammenhang ist es vorteilhaft, wenn nach dem Authentifizieren und Autorisieren des Benutzers eine Dienstqualitätsanfrage an einen Authentifizierungs-, Autorisierungs- und Abrechnungs-Client, kurz: AAA-Client, des Zugangsnetzwerks gestellt wird zum Bereitstellen der gewünschten Dienstqualität auf der Luftschnittstelle. Der Vorteil ist, dass der AAA-Client sich in dem Zugangsnetzwerk befindet, in dem der Benutzer angemeldet ist, und dem Benutzer in der AAA-Infrastruktur am nächsten ist und daher sehr einfach das Bereitstellen der gewünschten Dienstqualität auf der Luftschnittstelle veranlassen kann.

In diesem Zusammenhang ist es weiter vorteilhaft, wenn der AAA-Server mit einem Authentifizierungs-, Autorisierungs- und Abrechnungs-Proxy, kurz: AAA-Proxy, kommuniziert und die Dienstqualitätsanfrage über den AAA-Proxy an den AAA-Client weitergegeben wird. Dies hat den Vorteil, dass bei einem großen Zugangsnetzwerk, das viele AAA-Clients aufweist, die AAA-Clients des Zugangsnetzwerks dem AAA-Server nicht unmittelbar bekannt sein müssen und die Kommunikation mit dem jeweiligen AAA-Client einfacher über den gemeinsamen AAA-Proxy des Zugangsnetzwerks erfolgen kann.

In diesem Zusammenhang ist es ferner vorteilhaft, wenn durch den AAA-Proxy lokale Richtlinien angewendet werden und eine Zugangskontrolle in dem Zugangsnetzwerk durchgeführt wird. Der Vorteil ist, dass der AAA-Proxy die verfügbaren Ressourcen des gesamten Zugangsnetzwerks verwalten kann, so dass diese nicht erst von den einzelnen AAA-Clients abgefragt werden müssen. Die AAA-Clients können so einfacher ausgebildet sein.

In einer weiteren vorteilhaften Ausgestaltung kommuniziert der AAA-Client mit einer Basisstation zum Durchführen der Signalisierung der gewünschten Dienstqualität auf einer Verbindungsebene zum Bereitstellen der Dienstqualität auf der Luftschnittstelle. Der AAA-Client kann separat von der Basisstation ausgebildet sein, insbesondere in einem Gateway des Zugangsnetzwerks, oder von der Basisstation umfasst sein. Die Basisstation stellt die Luftschnittstelle als Ressource dem Benutzer zur Verfügung. Der Vorteil ist, dass zwischen einem Netzwerkendgerät des Benutzers und der Basisstation so sehr einfach die Dienstqualität auf der Luftschnittstelle auf der Verbindungsebene eingerichtet werden kann.

In diesem Zusammenhang ist es vorteilhaft, wenn nach der Signalisierung der Dienstqualität auf der Verbindungsebene eine Dienstqualitätsantwort entlang der AAA-Infrastruktur an den AAA-Server zurückgemeldet wird. Dies hat den Vorteil, dass dadurch der AAA-Server darüber informiert ist, dass die gewünschte Dienstqualität bereitgestellt ist oder gegebenenfalls nicht bereitgestellt werden konnte. Ferner kann dies von dem AAA-Server dann auch der Anwendungsfunktion zurückgemeldet werden.

Ausführungsbeispiele der Erfindung sind im Folgenden anhand der schematischen Zeichnungen erläutert. Es zeigen:
- Figur 1: eine Netzwerkarchitektur eines WiMAX-Kommunikationsnetzwerks bezüglich einer Signalisierung einer Dienstqualität,
- Figur 2: einen Ablauf eines Netzwerkzugangsverfahrens,
- Figur 3: einen Ablauf der Signalisierung der Dienstqualität über eine AAA-Infrastruktur,
- Figur 4: eine erste Ausführungsform eines Kommunikationsnetzwerks gemäß ITU-T und
- Figur 5: eine zweite Ausführungsform des Kommunikationsnetzwerks gemäß ITU-T.

Elemente gleicher Konstruktion oder Funktion sind figürenübergreifend mit den gleichen Bezugszeichen versehen.

Für ein WiMAX-Kommunikationsnetzwerk ist vorgesehen, dass eine Dienstqualität für eine Datenübertragung, die auch als Quality of Service oder kurz mit QoS bezeichnet wird, abhängig von Anforderungen des jeweiligen Dienstes vorgebbar ist. Die Dienstqualität umfasst beispielsweise eine Übertragungsbandbreite, die gewährleistet sein soll, oder eine maximale zeitliche Verzögerung der zu übertragenden Daten auf einem Weg von einem Absender zu einem Empfänger der Daten, die nicht überschritten werden soll. Beispielsweise stellen Dienste, die Audio- oder insbesondere Videostreams bereitstellen, hohe Anforderungen an eine Übertragungsbandbreite des Kommunikationsnetzwerks. Werden Telefongespräche übertragen, z.B. über Voice over IP oder kurz VoIP, dann wird eine geringe zeitliche Verzögerung der übertragenen Daten verlangt.

Ein besonderes Merkmal einer Netzwerkarchitektur des WiMAX-Kommunikationsnetzwerks ist, dass eine Anwendungsfunktion AF einerseits und ein Zugangsnetzwerk ASN andererseits unabhängig voneinander sind. Die Anwendungsfunktion AF kann auch als Application Function bezeichnet werden und repräsentiert z.B. ein SIP-Proxy. Das Zugangsnetzwerk ASN kann auch als besuchtes Netzwerk oder als Access Service Network bezeichnet werden. An dem Zugangsnetzwerk ASN kann sich ein Benutzer mit einem Netzwerkendgerät MS anmelden. Das Netzwerkendgerät MS ist beispielsweise ein Mobiltelefon, ein Personal Digital Assistant oder kurz PDA oder ein anderer tragbarer Computer und ist ausgebildet zum drahtlosen Kommunizieren in dem WiMAX-Kommunikationsnetzwerk.

Die jeweilige Anwendungsfunktion AF, die der Benutzer mit seinem Netzwerkendgerät MS benutzen möchte, kennt im Wesentlichen nur eine Netzwerkadresse des Netzwerkendgeräts MS, nicht jedoch in welchem Zugangsnetzwerk ASN das Netzwerkendgerät MS aktuell angemeldet ist. Dadurch besteht das Problem, dieses Zugangsnetzwerk ASN herauszufinden und diesem die für das Nutzen der Anwendungsfunktion AF erforderliche Dienstqualität zu Signalisieren, so dass das Zugangsnetzwerk ASN die gewünschte Dienstqualität bereitstellen kann. Bei dem WiMAX-Kommunikationsnetzwerk ist insbesondere das Bereitstellen der Dienstqualität auf einer Luftschnittstelle R1 zwischen dem Netzwerkendgerät MS des Benutzers und dem Zugangsnetzwerk ASN von Bedeutung.

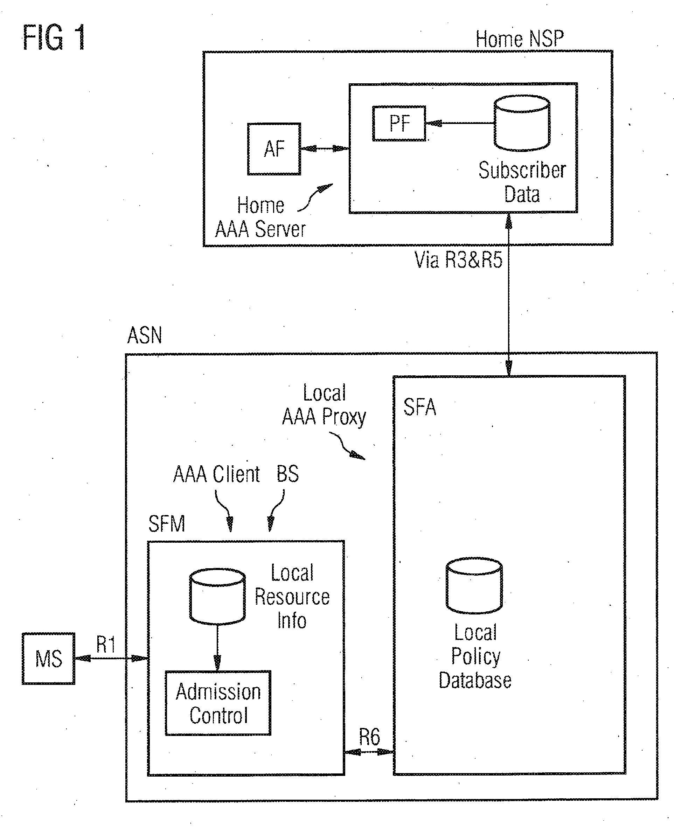

Figur 1 zeigt die Netzwerkarchitektur des WiMAX-Kommunikationsnetzwerks bezüglich der Signalisierung der Dienstqualität auf der Luftschnittstelle R1. Das Netzwerkendgerät MS des Benutzers ist über die Luftschnittstelle R1 mit dem Zugangsnetzwerk ASN gekoppelt. Das Zugangsnetzwerk ASN weist mindestens eine Basisstation BS auf, die die Luftschnittstelle R1 für das Netzwerkendgerät MS bereitstellt. Die Basisstation BS weist eine Dienstflussverwaltungseinheit SFM auf, die auch als Service Flow Management bezeichnet werden kann, oder ist mit der Dienstflussverwaltungseinheit SFM gekoppelt. Die Dienstflussverwaltungseinheit SFM ist ausgebildet, lokal, d.h. bezogen auf die Basisstation BS, durch eine lokale Zugangskontrolle Local Admission Control Zugang zu Ressourcen der Basisstation BS zu gewähren oder abzulehnen und die Ressourcen, z.B. Übertragungsbandbreite auf der Luftschnittstelle R1, bereitzustellen und zu verwalten.

Die Dienstflussverwaltungseinheit SFM weist ferner einen lokalen Authentifizierungs-, Autorisierungs- und Abrechnungs-Client AAA Client auf oder ist als solcher ausgebildet. Alternativ kann der Authentifizierungs-, Autorisierungs- und Abrechnungs-Client AAA-Client die Dienstflussverwaltungseinheit SFM umfassen oder der Authentifizierungs-, Autorisierungs- und Abrechnungs-Client AAA-Client und die Dienstflussverwaltungseinheit SFM können auch separat voneinander ausgebildet oder angeordnet sein. Beispielsweise kann der Authentifizierungs-, Autorisierungs- und Abrechnungs-Client AAA-Client auch in einem Gateway des Zugangsnetzwerks ASN angeordnet sein. Der Authentifizierungs-, Autorisierungs- und Abrechnungs-Client AAA-Client beginnt ein Netzwerkzugangsverfahren, wenn sich der Benutzer mit seinem Netzwerkendgerät MS an dem Zugangsnetzwerk ASN anmelden möchte, um Zugang zu dem Zugangsnetzwerk ASN zu erhalten.

Die Dienstflussverwaltungseinheit SFM ist über eine Schnittstelle R6 mit einer Dienstflussautorisierungseinheit SFA gekoppelt, die auch als Service Flow Authorization bezeichnet werden kann. Die Dienstflussautorisierungseinheit SFA ist ausgebildet, auf das Zugangsnetzwerk ASN bezogene lokale Richtlinien Local Policies anzuwenden für die Autorisierung des Benutzers für das Nutzen der Ressourcen des Zugangsnetzwerks ASN. Bevorzugt ist die Dienstflussautorisierungseinheit SFA ausgebildet, diese Autorisierung für alle Basisstationen BS des Zugangsnetzwerks ASN durchzuführen, d.h. es muss nur eine Dienstflussautorisierungseinheit SFA in dem Zugangsnetzwerk ASN vorgesehen sein. Vorzugsweise ist die Dienstflussautorisierungseinheit SFA über die verfügbaren Ressourcen der jeweiligen Basisstationen BS informiert.

Die Dienstflussautorisierungseinheit SFA umfasst für das Autorisieren einen lokalen Authentifizierungs-, Autorisierungsund Abrechnungs-Proxy Local AAA Proxy oder ist als solcher ausgebildet. Alternativ kann der Authentifizierungs-, Autorisierungs- und Abrechnungs-Proxy Local AAA Proxy die Dienstflussautorisierungseinheit SFA umfassen. Der Authentifizierungs-, Autorisierungs- und Abrechnungs-Proxy Local AAA Proxy ist ausgebildet, mit dem jeweiligen Authentifizierungs-, Autorisierungs- und Abrechnungs-Client AAA Client zu kommunizieren für das Authentifizieren und Autorisieren des Benutzers bei dem Netzwerkzügangsverfahren.

Das Zugangsnetzwerk ASN ist über Schnittstellen R3 und R5 mit einem Heimatnetzwerk Home NSP des Benutzers gekoppelt, das auch als Network Service Provider bezeichnet werden kann. Das Heimatnetzwerk Home NSP umfasst die Anwendungsfunktion AF oder ist mit dieser gekoppelt. Das Heimatnetzwerk Home NSP umfasst ferner eine Richtlinienfunktion PF, die auch als Policy Function bezeichnet werden kann. Die Richtlinienfunktion PF umfasst einen Authentifizierungs-, Autorisierungs- und Abrechnungs-Server Home AAA Server oder ist als solcher ausgebildet. Alternativ umfasst der Authentifizierungs-, Autorisierungs- und Abrechnungs-Server Home AAA Server die Richtlinienfunktion PF. Die Richtlinienfunktion PF bzw. der Authentifizierungs-, Autorisierungs- und Abrechnungs-Server Home AAA Server hat Zugriff auf Informationen über alle Benutzer des Heimatnetzwerks Home NSP, insbesondere auf Informationen bezüglich Zugangs- oder Nutzungsberechtigungen für den Zugang zu dem Zugangsnetzwerk ASN oder für das Nutzen der Anwendungsfunktion AF und auf Informationen die Abrechnung betreffend, z.B. die Abrechnung für das Nutzen der Anwendungsfunktion AF oder des Zugangsnetzwerks ASN. Die Anwendungsfunktion AF ist ausgebildet, mit der Richtlinienfunktion PF des Heimatnetzwerks Home NSP zu kommunizieren zu Authentifizierungs, Autorisierungs- und Abrechnungszwecken.

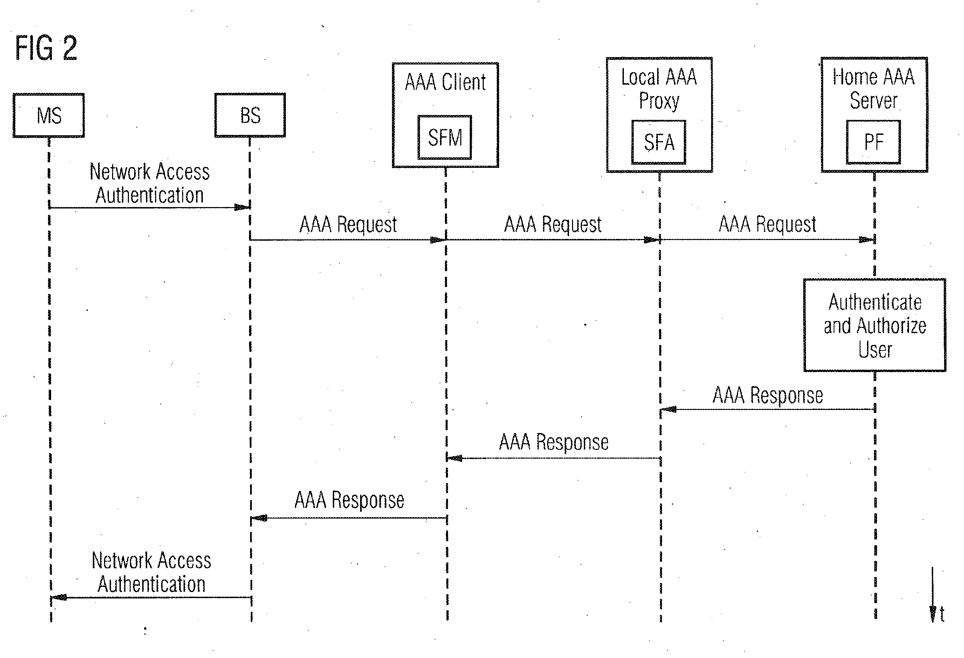

Figur 2 zeigt einen Ablauf des Netzwerkzugangsverfahrens, das bei dem Anmelden des Benutzers an dem Zugangsnetzwerk ASN durchgeführt wird. Das Netzwerkendgerät MS des Benutzers kommuniziert mit der Basisstation BS über die Luftschnittstelle R1 und sendet Zugangsinformationen an die Basisstation BS für die Authentifizierung des Benutzers. Die Basisstation BS stellt eine Authentifizierungs-, Autorisierungs- und Abrechnungs-Anfrage AAA Request an die Dienstflussverwaltungseinheit SFM bzw. den Authentifizierungs-, Autorisierungs- und Abrechnungs-Client AAA Client, der diese über den Authentifizierungs-, Autorisierungs- und Abrechnungs-Proxy Local AAA Proxy an den Authentifizierungs-, Autorisierungs- und Abrechnungs-Server Home AAA Server des Heimatnetzwerks Home NSP des Benutzers weiterleitet. Der Authentifizierungs-, Autorisierungs- und Abrechnungs-Server Home AAA Server bzw. die Richtlinienfunktion PF authentifiziert und autorisiert den Benutzer für den Zugang zu dem Zugangsnetzwerk ASN und erfasst und verwaltet diesbezüglich gegebenenfalls abrechnungsrelevante Informationen. Die erfolgte Authentifizierung und Autorisierung des Benutzers wird der Basisstation BS über den Authentifizierungs-, Autorisierungs- und Abrechnungs-Proxy Local AAA Proxy und den Authentifizierungs-, Autorisierungs- und Abrechnungs-Client AAA Client in Form einer Authentifizierungs-, Autorisierungs- und Abrechnungs-Antwort AAA Response zugestellt und dann dem Netzwerkzugangsgerät MS des Benutzers mitgeteilt. Durch dieses Netzwerkzugangsverfahren kennt der Authentifizierungs-, Autorisierungs- und Abrechnungs-Server Home AAA Server das Zugangsnetzwerk ASN, in dem sich der Benutzer aktuell befindet.

Möchte der Benutzer nach Abschluss des Netzwerkzugangsverfahrens eine dienstqualitätsbezogene Anwendung der Anwendungsfunktion AF nutzen, z.B. einen Videostream von der Anwendungsfunktion AF beziehen, dann ist es vorteilhaft, für das Übertragen des Videostreams von der Anwendungsfunktion AF an das Netzwerkendgerät MS die erforderliche Dienstqualität bereitzustellen, insbesondere bezüglich der dafür erforderlichen Übertragungsbandbreite, um einen störungsarmen Empfang des Videostreams an dem Netzwerkendgerät MS zu ermöglichen. Dazu muss insbesondere die gewünschte Dienstqualität auf der Luftschnittstelle R1 bereitgestellt werden.

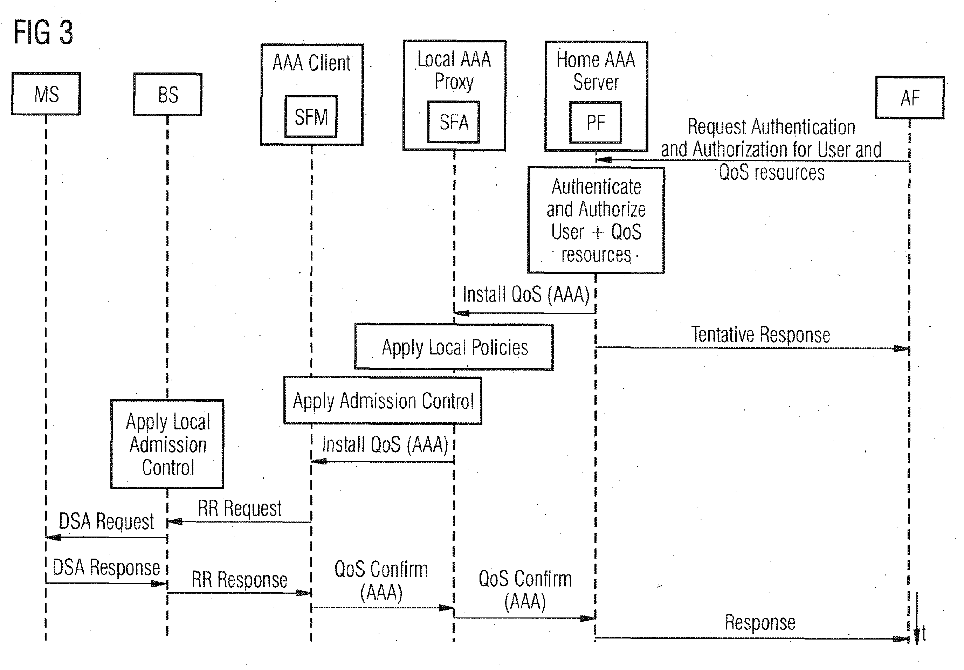

Die Anwendungsfunktion AF kennt das Zugangsnetzwerk ASN im Allgemeinen nicht, in dem sich der Benutzer aktuell befindet. Um die gewünschte Dienstqualität auf der Luftschnittstelle R1 vorgeben zu können, muss die gewünschte Dienstqualität jedoch an die Basisstation BS signalisiert werden. Figur 3 zeigt einen Ablauf der Signalisierung der Dienstqualität über die Authentifizierungs-, Autorisierungs- und Abrechnungs-Infrastruktur. Die Anwendungsfunktion AF fordert von dem Authentifizierungs-, Autorisierungs- und Abrechnungs-Server Home AAA Server die Authentifizierung und Autorisierung des Benutzers für das Nutzen der Anwendungsfunktion AF an. Ferner sendet die Anwendungsfunktion AF an den Authentifizierungs-, Autorisierungs- und Abrechnungs-Server Home AAA Server auch die gewünschte Dienstqualität. Der Authentifizierungs-, Autorisierungs- und Abrechnungs-Server Home AAA Server authentifiziert und autorisiert den Benutzer und gegebenenfalls auch die gewünschte Dienstqualität und sendet eine'Dienstqualitätsanfrage Install QoS an den Authentifizierungs-, Autorisierungs- und Abrechnungs-Proxy Local AAA Proxy des Zugangsnetzwerks ASN. Der Authentifizierungs-, Autorisierungs- und Abrechnungs-Server Home AAA Server kann ferner auch eine vorläufige Antwort Tentative Response an die Anwendungsfunktion AF zurückschicken, um dieser die erfolgte Authentifizierung und Autorisierung mitzuteilen.

Der Authentifizierungs-, Autorisierungs- und Abrechnungs-Proxy Local AAA Proxy wendet gegebenenfalls die lokalen Richtlinien Local Policies bezüglich der Nutzung der Ressourcen des Zugangsnetzwerks ASN durch den Benutzer an. Ferner leitet der Authentifizierungs-, Autorisierungs- und Abrechnungs-Proxy Local AAA Proxy die Dienstqualitätsanfrage Install QoS an den Authentifizierungs-, Autorisierungs- und Abrechnungs-Client AAA Client weiter. In dem Zugangsnetzwerk ASN, insbesondere durch die Dienstflussverwaltungseinheit SFM und die Dienstflussautorisierungseinheit SFA, wird die Zugangskontrolle Admission Control durchgeführt für ein Reservieren der Ressourcen für die gewünschte Dienstqualität.

Die Dienstflussverwaltungseinheit SFM stellt eine Ressourcenanfrage RR-Request an die Basisstation BS, die die gewünschten Ressourcen lokal durch die lokale Zugangskontrolle Local Admission Control bereitstellt. Die Basisstation BS sendet eine Hinzufügungsanfrage DSA-Request für ein dynamisches Hinzufügen eines Dienstes an das Netzwerkendgerät MS des Benutzers. Die Hinzufügungsanfrage DSA-Request kann auch als Dynamic Service Addition Anfrage bezeichnet werden. Abhängig von der Hinzufügungsanfrage DSA-Request wird zwischen dem Netzwerkendgerät MS und der Basisstation BS auf einer Verbindungsebene, die auch als Link Layer bezeichnet werden kann, die gewünschte Dienstqualität auf der Luftschnittstelle R1 eingerichtet. Das Netzwerkendgerät MS beantwortet die Hinzufügungsanfrage DSA-Request mit einer Hinzufügungsantwort DSA-Response. Die Basisstation BS sendet daraufhin eine Ressourcenantwort RR-Response an die Dienstflussverwaltungseinheit SFM zum Übermitteln der erfolgten Einrichtung oder Reservierung der Dienstqualität auf der Luftschnittstelle R.1. Der Authentifizierungs-, Autorisierungs- und Abrechnungs-Client AAA Client sendet daraufhin eine Dienstqualitätsantwort QoS Confirm über den Authentifizierungs-, Autorisierungs- und Abrechnungs-Proxy Local AAA Proxy an den Authentifizierungs-, Autorisierungs- und Abrechnungs-Server Home AAA Server. Der Authentifizierungs-, Autorisierungs- und Abrechnungs-Server Home AAA Server teilt der Anwendungsfunktion AF die Bereitstellung, oder bei Vorliegen eines Fehlers, einer Zugangsbeschränkung oder einer Nichtverfügbarkeit der gewünschten Dienstqualität, die Nichtbereitstellung der Dienstqualität auf der Luftschnittstelle R1 mit.

Für das Signalisieren der Dienstqualität zwischen dem Authentifizierungs-, Autorisierungs- und Abrechnungs-Server Home AAA Server und dem Authentifizierungs-, Autorisierungs- und Abrechnungs-Client AAA Client können beispielsweise die in H. Tschofenig et al., "RADIUS Quality of Service Support", draft-tschofenig-radext-qos-02.txt, October 2005 oder in F. Alfano et al., "Diameter Quality of Service Application", draft-alfano-aaa-qosprot-04.txt, September 2005 offenbarten Parameter genutzt werden.

Es ist jedoch ebenso möglich, dass die Anwendungsfunktion AF das Zugangsnetzwerk ASN, in dem sich der Benutzer aktuell befindet, ermittelt durch eine entsprechende Anfrage an den Authentifizierungs-, Autorisierungs- und Abrechnungs-Server Home AAA Server, der daraufhin der Anwendungsfunktion AF dieses Zugangsnetzwerk ASN in einer entsprechenden Antwort mitteilt. Die Signalisierung der Dienstqualität kann mit der Information, in welchem Zugangsnetzwerk ASN sich der Benutzer aktuell befindet, gegebenenfalls auch anders durchgeführt werden als oben beschrieben. Ferner kann die Information gegebenenfalls auch für andere Zwecke genutzt werden als für die Signalisierung der Dienstqualität.

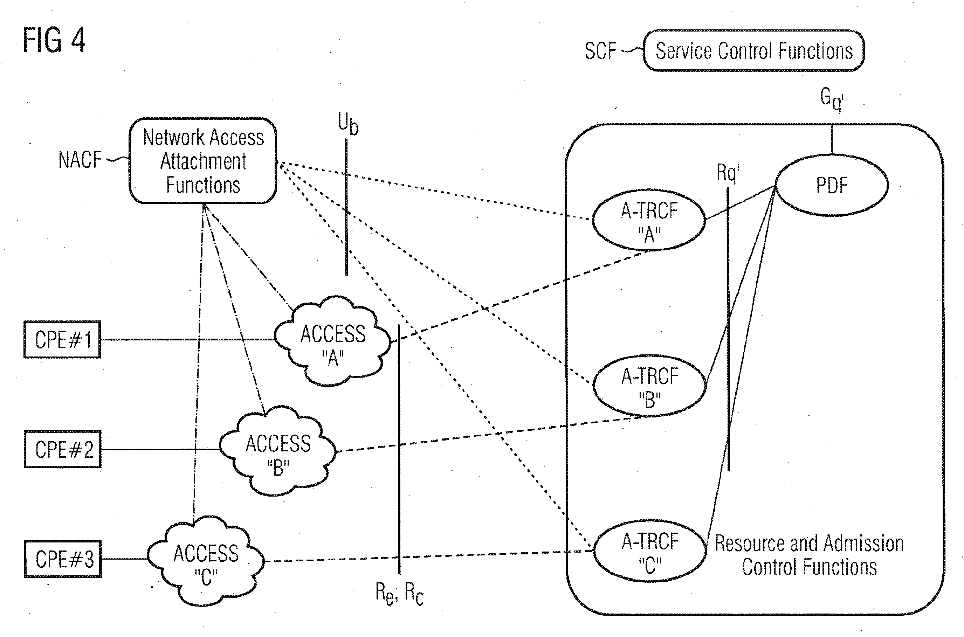

In der Study Group 11 der ITU-T ist eine von der Netzwerkarchitektur des WiMAX--Kommunikationsnetzwerks abweichende Netzwerkarchitektur Gegenstand eines Standardisierungsprozesses, die in Figur 4 dargestellt ist. In dieser Netzwerkarchitektur ist der Benutzer über ein Kundenzugangsgerät CPE mit einem Zugangsnetzwerk ACCESS gekoppelt. Das Kundenzugangsgerät CPE kann auch als Customer Premises Equipment bezeichnet werden und ermöglicht beispielsweise Anschluß an eine Digital Subscriber Line oder kurz DSL oder ist z.B. ein Kabelmodem. Das Zugangsnetzwerk ACCESS kann auch als Netzwerkoperator ACCESS bezeichnet werden. Über Schnittstellen Re, Rc ist das Zugangsnetzwerk ACCESS mit einer dienstunabhängigen, transporttechnologiespezifischen Zugangs-Transportressourcenkontrollfunktion A-TRCF gekoppelt, die auch als Access-Transport Resource Control Function bezeichnet werden kann. Die Zugangs-Transportressourcenkontrollfunktion A-TRCF ist über eine Schnittstelle Rq' mit einer transporttechnologieunabhängigen, serviceorientierten Richtlinienentscheidungsfunktion PDF gekoppelt, die auch als Policy Decision Function bezeichnet werden kann. Die Richtlinienentscheidungsfunktion PDF ist über eine Schnittstelle Gq' mit einer Dienstkontrollfunktion SCF gekoppelt, die auch als Service Control Function bezeichnet werden kann. Die Dienstkontrollfunktion SCF entspricht in Bezug auf die hier beschriebene Problematik etwa der Anwendungsfunktion AF in dem WiMAX-Kommunikationsnetzwerk und die Richtlinienentscheidungsfunktion PDF entspricht etwa der Richtlinienfunktion PF.

Jedes Zugangsnetzwerk ACCESS weist eine Netzwerkanschlusskontrollfunktion NACF auf, die auch als Network Attachment Control Function bezeichnet werden kann und die über einen Referenzpunkt Ub mit der dem jeweiligen Zugangsnetzwerk ACCESS zugeordneten Zugangs-Transportressourcenkontrollfunktion A-TRCF gekoppelt ist. Über die Netzwerkanschlusskontrollfunktion NACF und den Referenzpunkt Ub wird der Benutzer beim Anmelden an dem Zugangsnetzwerk ACCESS authentifiziert und autorisiert. Dadurch kennt die Netzwerkanschlusskontrollfunktion NACF das Zugangsnetzwerk ACCESS, in dem sich der Benutzer aktuell befindet, d.h. die Netzwerkanschlusskontrollfunktion NACF ist informiert über die Identität dieses Zugangsnetzwerks ACCESS, da sich der Benutzer über das zugehörige Kundenzugangsgerät CPE angemeldet hat und das Kundenzugangsgerät CPE diesem Zugangsnetzwerk ACCESS fest zugeordnet ist. Die Identität dieses Zugangsnetzwerks ACCESS wird somit von dem Kundenzugangsgerät CPE genutzt, um Zugang zu dem Zugangsnetzwerk ACCESS zu erhalten.

Entsprechend dem WiMAX-Kommunikationsnetzwerk besteht in dem Kommunikationsnetzwerk gemäß der ITU-T das Problem, dasjenige Zugangsnetzwerk ACCESS herauszufinden, in dem der Benutzer sich aktuell befindet, z.B. um die Dienstqualität in diesem Zugangsnetzwerk ACCESS abhängig von der Dienstkontrollfunktion SCF, die der Benutzer nutzen möchte, zu signalisieren und vorzugeben. Die Richtlinienentscheidungsfunktion PDF muss dazu diejenige Zugängs-Transportressourcenkontrollfunktion A-TRCF auswählen, der das Kundenzugangsgerät CPE des Benutzers über das zugehörige Zugangsnetzwerk ACCESS zugeordnet ist.

Diese Zugangs-Transportressourcenkontrollfunktion A-TRCF wird bisher bei dem Netzwerkzugangsverfahren basierend auf einer dem Kundenzugangsgerät CPE zugeordneten Netzwerkadresse ermittelt. Dies hat jedoch den Nachteil, dass dazu eine im Wesentlichen statische Aufteilung oder Partitionierung der verfügbaren Netzwerkadressen auf die unterschiedlichen Zugangsnetzwerke ACCESS vorgegeben sein muss, um über die Netzwerkadresse des Kundenzugangsgeräts CPE auf das zugehörige Zugangsnetzwerk ACCESS schließen zu können. Dadurch können die Netzwerkadressen nicht nach Bedarf zugeteilt werden, wodurch Engpässe entstehen können, die gegebenenfalls zu Zugangsbeschränkungen führen können.

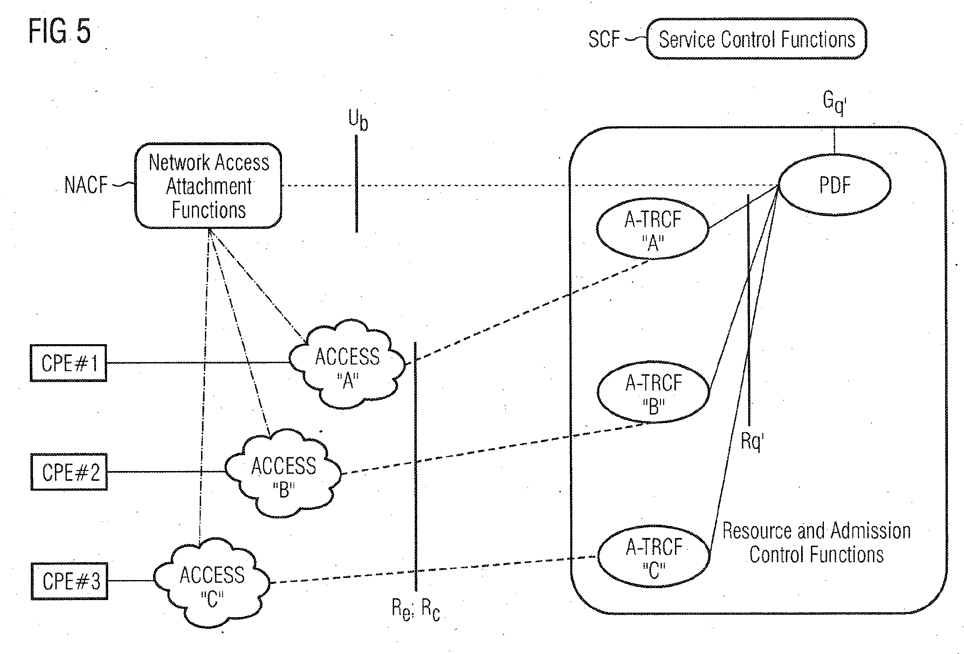

Die Richtlinienentscheidungsfunktion PDF kommuniziert oder interagiert daher erfindungsgemäß mit der Netzwerkanschlusskontrollfunktion NACF. Diese Kommunikation oder Interaktion erfolgt vorzugsweise über den Referenzpunkt Ub, der dazu anstatt zwischen der Netzwerkanschlusskontrollfunktion NACF und der jeweiligen Zugangs-Transportressourcenkontrollfunktion A-TRCF (Figur 4) zwischen der Netzwerkanschlusskontrollfunktion NACF und der Richtlinienentscheidungsfunktion PDF vorgesehen ist (Figur 5). Vorzugsweise erfolgt die zwischen der Netzwerkanschlusskontrollfunktion NACF und der jeweiligen Zugangs-Transportressourcenkontrollfunktion A-TRCF vorgesehene Kommunikation dann über die Richtlinienentscheidungsfunktion PDF und die Schnittstelle Rq'. Alternativ kann jedoch auch ausgehend von der in Figur 4 dargestellten Netzwerkarchitektur ein nicht dargestellter zusätzlicher Referenzpunkt zwischen der Netzwerkanschlusskontrollfunktion NACF und der Richtlinienentscheidungsfunktion PDF vorgesehen sein.

Bevorzugt repräsentiert der Referenzpunkt Ub eine Authentifizierungs-, Autorisierungs- und Abrechnungs-Infrastruktur des Kommunikationsnetzwerks, d.h. entsprechend dem WiMAX-Kommunikationsnetzwerk wird bei dem Kommunikationsnetzwerk gemäß der ITU-T das Zugangsnetzwerk ACCESS, in dem sich der Benutzer aktuell befindet, ermittelt durch Nutzen der Authentifizierungs-, Autorisierungs- und Abrechnungs-Infrastruktur, die dieses Zugangsnetzwerk ACCESS durch das zuvor für den Benutzer durchgeführte Netzwerkzugangsverfahren kennt. Mit der kenntnis dieses Zugangsnetzwerks ACCESS kann das Signalisieren der Dienstqualität in dieses Zugangsnetzwerk ACCESS sehr einfach erfolgen, z.B. ebenfalls durch Nutzen der Authentifizierungs-, Autorisierungs- und Abrechnungs-Infrastruktur oder durch ein anderes Verfahren zum Signalisieren und Bereitstellen der Dienstqualität.

## Patentansprüche

1. Verfahren zum Bereitstellen einer Dienstqualität auf einer Luftschnittstelle (R1) eines Zugangsnetzwerks '(ASN) in einem WiMAX-Kommunikationsnetzwerk durch eine Anwendungsfunktion (AF), die einem Benutzer des WiMAX-Kommunikationsnetzwerks eine dienstqualitätbezogene Anwendung bereitstellen möchte, **dadurch gekennzeichnet, dass**
- die gewünschte Dienstqualität über eine Authentifizierungs- , Autorisierungs- und Abrechnungs-Infrastruktur des WiMAX-Kommunikationsnetzwerks signalisiert wird,
- die Anwendungsfunktion (AF) mit einem Authentifizierungs-, Autorisierungs- und Abrechnungs-Server (Home AAA Server) eines Heimatnetzwerks (Home NSP) des Benutzers kommuniziert zum Authentifizieren und Autorisieren des Benutzers und
- die gewünschte Dienstqualität für die dienstqualitätbezogene Anwendung bei dieser Kommunikation zum Autorisieren an den Authentifizierungs-, Autorisierungs- und Abrechnungsserver (Home AAA Server) übertragen wird.

2. Verfahren nach Anspruch 1, bei dem nach dem Authentifizieren und Autorisieren des Benutzers eine Dienstqualitätsanfrage (Install QoS) an einen Authentifizierungs-, Autorisierungs- und Abrechnungs-Client (AAA Client) des Zugangsnetzwerks (ASN) gestellt wird zum Bereitstellen der gewünschten Dienstqualität auf der Luftschnittstelle (R1).

3. Verfahren nach Anspruch 2, bei dem
- der Authentifizierungs-, Autorisierungs- und Abrechnungs-Server (Home AAA Server) mit einem Authentifizierungs-, Autorisierungs- und Abrechnungs-Proxy (Local AAA Proxy) kommuniziert und
- die Dienstqualitätsanfrage (Install QoS) an den Authentifizierungs-, Autorisierungs- und Abrechnungs-Client (AAA Client) über den Authentifizierungs-, Autorisierungs- und Abrechnungs-Proxy (AAA Proxy) an den Authentifizierungs-, Autorisierungs- und Abrechnungsclient (AAA Client) weitergegeben wird.

4. Verfahren nach Anspruch 3, bei dem durch den Authentifizierungs-, Autorisierungs- und Abrechnungs-Proxy (AAA Proxy) lokale Richtlinien (Local Policies) angewendet werden und eine Zugangskontrolle (Admission Control) in dem Zugangsnetzwerk (ASN) durchgeführt wird.

5. Verfahren nach einem der Ansprüche 2 bis 4, bei dem der Authentifizierungs-, Autorisierungs- und Abrechnungs-Client (AAA Client) mit einer Basisstation (BS) kommuniziert zum Durchführen der Signalisierung der gewünschten Dienstqualität auf einer Verbindungsebene zum Bereitstellen der Dienstqualität auf der Luftschnittstelle (R1).

6. Verfahren nach Anspruch 5, bei dem nach der Signalisierung der Dienstqualität auf der Verbindungsebene eine Dienstqualitätsantwort (QoS Confirm) entlang der Authentifizierungs-, Autorisierungs- und Abrechnungs-Infrastruktur an den Authentifizierungs-, Autorisierungs- und Abrechnungs-Server (Home AAA Server) zurückgemeldet wird.

## Claims

1. Method for providing a quality of service on a radio interface (R1) of an access network (ASN) in a WiMAX communication network by means of an application function (AF) that wants to provide a QoS-related application to a user of the WiMAX communication network,
**characterised in that**
- the desired quality of service is signalled via an authentication, authorisation and accounting infrastructure of the WiMAX communication network,
- the application function (AF) communicates with an authentication, authorisation and accounting server (Home AAA Server) of a home network (Home NSP) of the user for the purpose of authenticating and authorising the user, and
- the desired quality of service for the QoS-related application is transmitted to the authentication, authorisation and accounting server (Home AAA Server) in the context of this communication for authorisation.

2. Method according to claim 1, in which after the authentication and authorisation of the user, a QoS request (Install QoS) is submitted to an authentication, authorisation and accounting client (AAA Client) of the access network (ASN) for the purpose of providing the desired quality of service on the radio interface (R1).

3. Method according to claim 2, in which
- the authentication, authorisation and accounting server (Home AAA Server) communicates with an authentication, authorisation and accounting proxy (Local AAA Proxy), and
- the QoS request (Install QoS) to the authentication, authorisation and accounting client (AAA Client) is forwarded to the authentication, authorisation and accounting client (AAA Client) via the authentication, authorisation and accounting proxy (AAA Proxy).

4. Method according to claim 3, in which local policies (Local Policies) are applied by the authentication, authorisation and accounting proxy (AAA Proxy) and an admission control (Admission Control) is carried out in the access network (ASN).

5. Method according to one of claims 2 to 4, in which the authentication, authorisation and accounting client (AAA Client) communicates with a base station (BS) in order to perform the signalling of the desired quality of service on a connection level, in order to provide the quality of service on the radio interface (R1).

6. Method according to claim 5, in which after signalling the quality of service on the connection level, a QoS confirmation (QoS Confirm) is reported back along the authentication, authorisation and accounting infrastructure to the authentication, authorisation and accounting server (Home AAA Server).

## Revendications

1. Procédé destiné à fournir une qualité de service sur une interface aérienne (R1) d'un réseau d'accès (ASN) dans un réseau de communication WiMAX par une fonction d'application (AF) qui souhaite fournir une application en rapport avec la qualité de service à un utilisateur du réseau de communication WiMAX, **caractérisé en ce que** :
- la qualité de service souhaitée est signalée via une infrastructure d'authentification, d'autorisation et de facturation du réseau de communication WiMAX ;
- la fonction d'application (AF) communique avec un serveur d'authentification, d'autorisation et de facturation (Home AAA Server) d'un réseau nominal (Home NSP) de l'utilisateur pour authentifier et autoriser l'utilisateur, et
- la qualité de service souhaitée pour l'application en rapport avec la qualité de service est transmise au serveur d'authentification, d'autorisation et de facturation (Home AAA Server) lors cette communication pour autorisation.

2. Procédé selon la revendication 1, selon lequel est faite, après l'authentification et l'autorisation de l'utilisateur, une requête de qualité de service (Install QoS) à un client d'authentification, d'autorisation et de facturation (AAA Client) du réseau d'accès (ASN) aux fins de fournir la qualité de service souhaitée sur l'interface aérienne (R1).

3. Procédé selon la revendication 2, selon lequel :
- le serveur d'authentification, d'autorisation et de facturation (Home AAA Server) communique avec un proxy d'authentification, d'autorisation et de facturation (Local AAA Proxy) et
- la requête de qualité de service (Install QoS) faite au client d'authentification, d'autorisation et de facturation (AAA Client) est retransmise au client d'authentification, d'autorisation et de facturation (AAA Client) via le proxy d'authentification, d'autorisation et de facturation (AAA Proxy).

4. Procédé selon la revendication 3, selon lequel le proxy d'authentification, d'autorisation et de facturation (AAA Proxy) applique des directives locales (Local Policies) et effectue un contrôle d'accès (Admission Control) dans le réseau d'accès (ASN).

5. Procédé selon l'une des revendications 2 à 4, selon lequel le client d'authentification, d'autorisation et de facturation (AAA Client) communique avec une station de base (BS) pour effectuer la signalisation de la qualité de service souhaitée sur une couche de liaison pour la fourniture de la qualité de service sur l'interface aérienne (R1).

6. Procédé selon la revendication 5, selon lequel, après la signalisation de la qualité de service sur la couche de liaison, une réponse de qualité de service (QoS Confirm) est signalée en retour le long de l'infrastructure d'authentification, d'autorisation et de facturation, au serveur d'authentification, d'autorisation et de facturation (Home AAA Server).
